# EUROPÄISCHE PATENTSCHRIFT

(11) **EP 1 074 306 B1**
(45) Veröffentlichungstag und Bekanntmachung des Hinweises auf die Patenterteilung: **14.09.2005**
(21) Anmeldenummer: 00115291.7
(22) Anmeldetag: 14.07.2000
(51) Int. Cl.: B05B 12/00, B05B 5/00, G05B 13/02

(54) **Verfahren zur Ermittlung von Sprühparametern für eine Lacksprühanlage**
Method for determining spray parameters for a spray coating installation
Procédé de détermination des paramètres de pulvérisation pour une installation de revêtement par pulvérisation

(30) Priorität: 31.07.1999 DE 19936148
(43) Veröffentlichungstag der Anmeldung: 07.02.2001
(73) Patentinhaber: ABB RESEARCH LTD., 8050 Zürich (CH)
(72) Erfinder: Eickmeyer, Dietmar, Dr., 69126 Heidelberg (DE); Börner, Gunter, Dr. Ing., 69242 Mühlhausen (DE)
(74) Vertreter: Miller, Toivo

(56) Entgegenhaltungen:
- DE-A- 4 112 985
- PAYNE R D ET AL: "SPRAY FORMING QUALITY PREDICTIONS VIA NEURAL NETWORKS" JOURNAL OF MATERIALS ENGINEERING AND PERFORMANCE, ASM INTERNATIONAL, MATERIALS PARK, US, Bd. 2, Nr. 5, Oktober 1993 (1993-10), Seiten 693-701, XP000946210 ISSN: 1059-9495
- ZAPPIA T J ET AL: "FUZZY LOGIC AND THE SPRAY FORMING PROCESS" PROCEEDINGS OF THE SPIE, SPIE, BELLINGHAM, VA, US, Bd. 2061, 1993, Seiten 504-515, XP000955650
- ALLEN MATTESON M ET AL: "AN APPROACH TO MODELING THE SPRAY FORMING PROCESS WITH ARTIFICIAL NEURAL NETWORKS" PROCEEDINGS OF THE SPIE, SPIE, BELLINGHAM, VA, US, Bd. 2189, 1994, Seiten 423-432, XP000955642

## Beschreibung

Die Erfindung bezieht sich auf ein Verfahren zur Ermittlung von Sprühparametern, die geeignet sind als Eingabewerte für eine Lacksprühanlage mit elektrostratischer Aufladung eines Flüssiglacks.

Wenn ein bestimmtes Lackierergebnis einer elektrostatisch basierten Lackieranlage vorgegeben wird, das also anzustreben ist, dann müssen anhand einer zu erzielenden Lackdickenverteilung die zugehörigen physikalischen Sprühparameter, wie Farbvolumen, Lenkluftrate, Steuerluftrate oder Hochspannung bestimmt werden. Dies erfolgt in der Praxis im wesentlichen auf der Grundlage empirischer Erfahrungen der Benutzer von Lackieranlagen. Die durchschnittliche Lackdickenverteilung läßt sich zwar anhand des durchschnittlichen Farbdurchsatzes pro betrachteter Fläche ermitteln, für die Ermittlung der Sprühparameter korrespondierend zu einer exakten Lackdickenverteilung existiert jedoch kein Verfahren.

Der Erfindung liegt die Aufgabe zugrunde, ein Verfahren anzugeben, mit dem im Fall der Vorgabe eines bestimmten Lackierergebnisses, also einer Lackdickenverteilung, die dazu erforderlichen Eingabewerte für eine Lacksprühanlage, also die physikalischen Sprühparameter ermittelbar sind.

Diese Aufgabe wird durch ein Verfahren zur Ermittlung von Sprühparametern gelöst, das gemäß den im Anspruch 1 angegebenen Merkmalen arbeitet. Vorteilhafte Ausgestaltungen sind in weiteren Ansprüchen angegeben.

Bei diesem Verfahren erfolgt die Ermittlung der einzustellenden Sprühparameter aus einem zu erzielenden, gewünschten Sprühbild mit Hilfe künstlicher neuronaler Netze, die anhand realer Meßdaten angelernt wurden. Die Verwendung eines neuronalen Netzwerkes zur Qualitätsvorhersage wird in (D1) XP 000 946 210 beschrieben.

Eine weitere Beschreibung der Erfindung erfolgt nachstehend anhand von Beispielen und Zeichnungsfiguren.

Es zeigen:
- Fig. 1: eine schematische Darstellung einer Lacksprühvorrichtung und der von ihr erzeugten Sprühwolke,
- Fig. 2: ein Schnittbild einer realen Lackdickenverteilung,
- Fig. 3: ein Funktionsschema des Verfahrens,

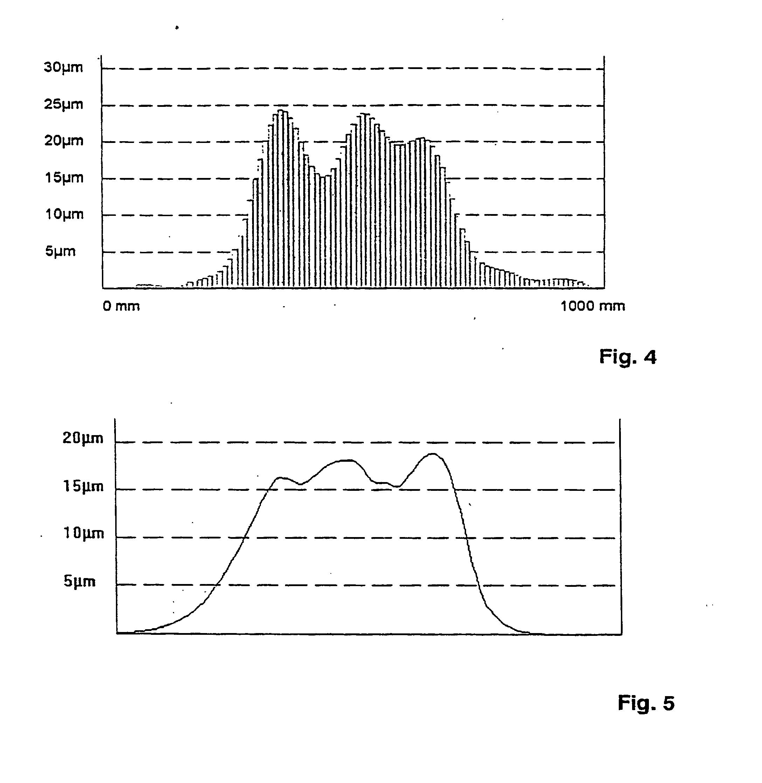

- Fig. 4: ein Schnittbild einer virtuellen Lackdickenverteilung, und
- Fig. 5: ein Schnittbild einer virtuellen Lackdickenverteilung, die mittels eines Modells ermittelt wurde.

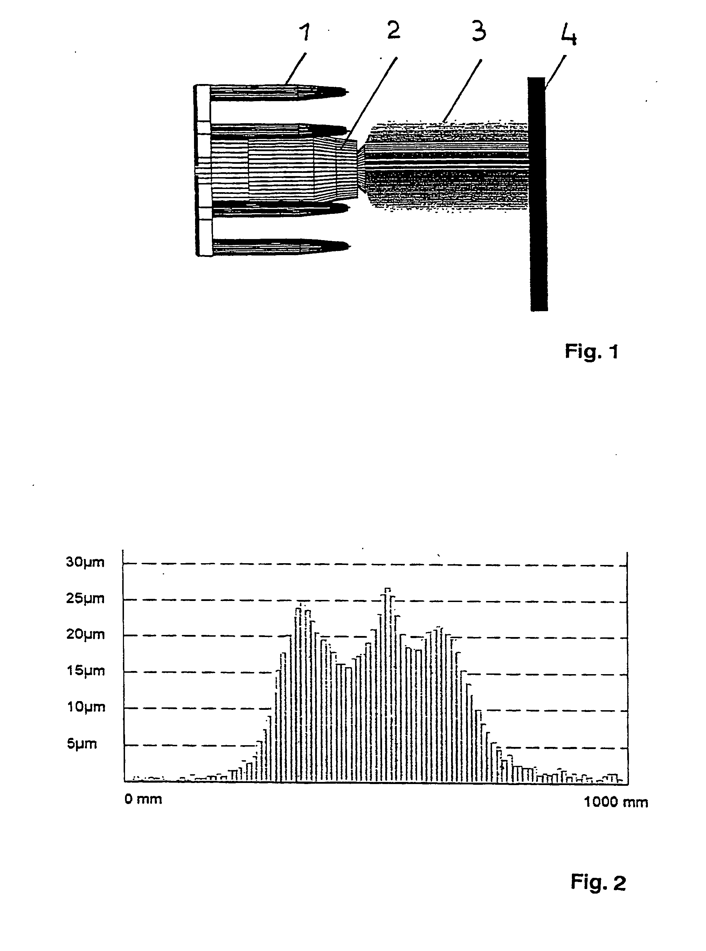

Fig. 1 zeigt eine schematische Darstellung einer Lacksprüheinrichtung 2, der einen Lacksprühstrahl 3 oder eine Lacksprühwolke liefert, wobei eine Aufladung mittels Elektroden 1 erfolgt. Der Lack wird auf einen Gegenstand 4 abgeschieden.

Durch horizontale oder vertikale Bewegung der Sprüheinrichtung 2 ist eine Lackschicht auf dem Gegenstand 4 erzeugbar. Die Lackdickenverteilung ist meßbar. Fig. 2 zeigt das Ergebnis einer solchen Lackschichtanalyse in 2-dimensionaler Form, wobei auf der Ordinate die Lackschichtdicke in Mikrometer und auf der Abszisse der Meßwert angegeben ist. Eine derartige Schnittkurve der Lackdickenverteilung liegt üblicherweise in Form von etwa 200 diskreten Meßwerten vor.

Die gewünschten Größen, die anhand dieser Meßwerte ermittelt werden sollen, sind zahlenmäßig etwa 10 Sprühparameter, beispielsweise Lackvolumen, Lenkluftmenge pro Zeiteinheit, Steuerluftmenge pro Zeiteinheit, Hochspannung, Bewegungsgeschwindigkeit des Applikators (Sprüheinrichtung), Drehzahl des Zerstäubers (bei üblicher rotierender Zerstäuberglocke der Sprüheinrichtung), und Drehwinkel der Anordnung.

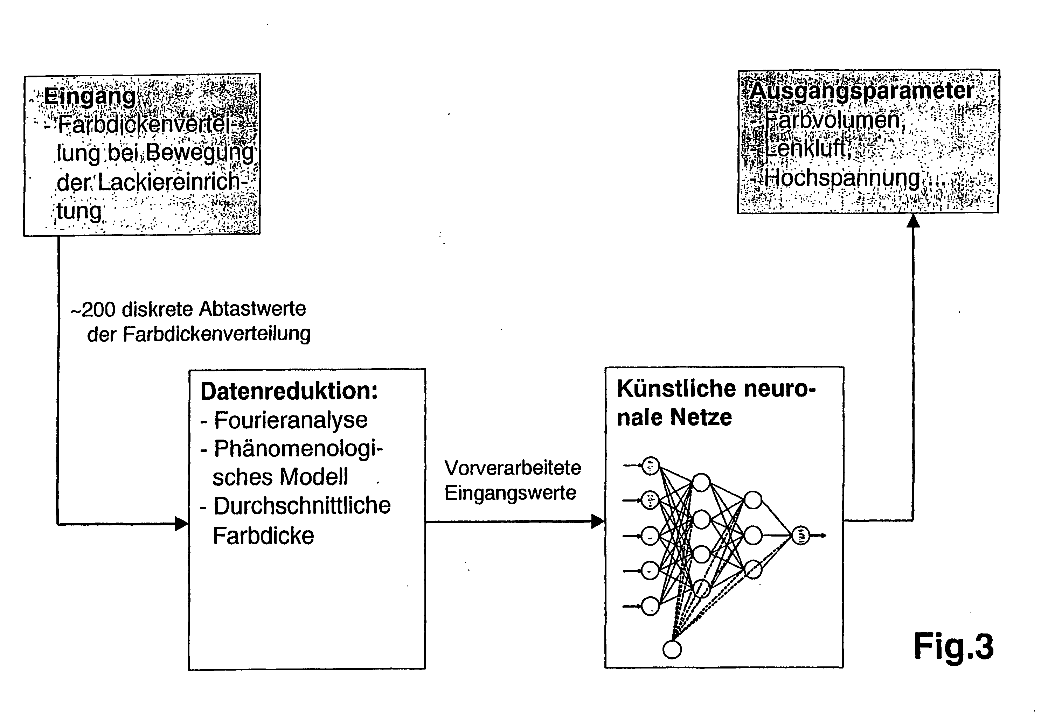

In Fig. 3 ist der grundsätzliche Verfahrensablauf dargestellt.

Für jeden der zu ermittelnden Sprühparameter ist ein künstliches neuronales Netz mit je einem Ausgang anzulernen, dessen Ausgangswert in einem festen Zusammenhang mit dem zu ermittelnden Sprühparameter steht. Es sind aber auch Varianten möglich, bei denen ein Netz über mehrere Ausgänge verfügt, die jeweils einem der zu ermittelnden Sprühparameter entsprechen.

Die Eingangsgrößen für die künstlichen neuronalen Netze sind durch die Merkmale repräsentiert, die aus den zur Verfügung stehenden ca. 200 Meßwerten ermittelt werden. Eine solche Merkmalsextraktion ist beim Einsatz künstlicher neuronaler Netze üblich und dient sowohl der Datenreduktion als auch dem Einbringen von bereits vorhandenem Wissen, wie z.B. der eingangs erwähnten durchschnittlichen Lackdickenverteilung.

Welche Merkmale dem jeweiligen künstlichen neuronalen Netz als Eingangsgrößen zugeführt werden, ist keinen bestimmten Regeln unterworfen. Folgende Merkmale haben sich als sinnvoll erwiesen:
- durch Fourieranalyse des Schnittbildes der Lackdickenverteilung (vgl. Fig. 2) werden jeweils die Amplitude der 2. bis 14. Oberschwingung ermittelt, wie in Fig. 3 dargestellt, und als Eingangsparameter für das künstliche neuronale Netz verwendet;
- mittlerer Wert der Lackdickenverteilung;
- Parameter, die den Eigenschaften der verwendeten Farbe entsprechen (Viskosität, Ergiebigkeit);
- ein Parameter, der die Art der Farbe angibt, aber keine spezifischen Eigenschaften enthält (deren Eigenschaften werden im Lernprozeß in das "Wissen" des künstlichen neuronalen Netzes einbezogen). Zweckmäßigerweise ist für jede Farbe ein separater Eingang zu verwenden, der entweder den Wert 0 oder den Wert 1 hat. Die Angabe der Farbe in Form eines einzigen Wertes zwischen 1 und n (=Anzahl der Farben) ist nicht zweckmäßig, da beim Lernprozess die Art der Farbe als physikalische Eigenschaft fehlinterpretiert werden könnte.

Andere Möglichkeiten, wie die iterative Bestimmung eines möglichst ähnlichen Schnittbildes einer Lackverteilung, das durch ein geeignetes Modell, z.B. beruhend auf künstlichen neuronalen Netzen erzeugt wird, sind möglich. Nach Ermittlung eines solchen, in Fig.5 dargestellten Schnittbildes sind die Parameter des Modells, die nicht den realen Sprühparametem entsprechen, bekannt und können als Eingangsparameter für ein künstliches neuronales Netz zur Ermittlung der realen Sprühparameter dienen. Ein Vorteil dieses Vorgehens besteht darin, daß virtuelle Lackdickenverteilungen, die physikalisch ausgeschlossen sind, durch ein solches Modell zu der ähnlichsten physikalisch sinnvollen Variante konvertiert werden können. Beispielsweise kann die mittlere quadratische Abweichung der diskreten Werte der Lackdickenverteilung ermittelt werden.

Ein geeigneter Typ eines neuronalen Netzes ist das Multilayer-Perceptron, das mit Hilfe eines Gradienten-Abstiegsverfahrens (Backpropagation) angelernt wurde; es sind aber auch andere Netzarten mit reellen Ein- und Ausgangsgrößen denkbar. Die Zahl der Eingangsneuronen der jeweiligen Netze entspricht der Zahl der verwendeten Eingangsparameter (ca. 15), die Zahl der Ausgangsneuronen entspricht der Zahl der von diesem Netz zu ermittelnden Sprühparameter, d.h. 1 oder auch mehr. Die Anzahl der Zwischenschichten (hidden layer) kann 1 oder 2 betragen je nachdem, bei welcher Variante der Lernprozess erfolgreicher abläuft.

Der Lernvorgang erfolgt unter Verwendung einer geeigneten Anzahl von realen Messungen (typisch >300), wobei stets alle zur Verfügung stehenden Messungen verwendet werden sollten. Jede Messung muß neben der Lackdickenverteilung in Form diskreter Werte auch die zugehörigen realen Sprühparameter enthalten. Die Merkmalsextraktion aus den diskreten Abtastwerten, die bei der Anwendung des Verfahrens praktiziert wird, muß in genau der selben Art und Weise auch bei der Generierung des Lerndatensatzes durchgeführt werden.

## Patentansprüche

1. Verfahren zur Ermittlung von Sprühparametern, die geeignet sind als Eingabewerte für eine Lacksprühanlage mit elektrostatischer Aufladung eines Flüssiglacks, wobei
a) wenigstens ein künstliches neuronales Netz zur Ermittlung der Sprühparameter verwendet wird, und wobei je Sprühparameter ein Ausgang eines solchen neuronalen Netzes zur Verfügung steht,
b) dem einen neuronalen Netz oder mehreren neuronalen Netzen zunächst in einer Lernphase als Eingangswerte eine geeignete Anzahl realer Meßwerte zugeführt werden, die jeweils neben einer Lackdickenverteilung in Form diskreter Werte auch die zugehörigen realen Sprühparameter enthalten,
c) dem einen neuronalen Netz oder mehreren neuronalen Netzen in der Anwendungsphase Eingangswerte zugeführt werden, die Ergebnis einer Analyse der Lackdichteverteilung eines angestrebten, also vorgegebenen Sprühergebnisses sind.

2. Verfahren nach Anspruch 1, **dadurch gekennzeichnet, daß** die in der Lernphase einzugebenden realen Meßwerte wenigstens teilweise mittels eines mathematischen Modells der Lacksprühanlage ermittelt werden.

3. Verfahren nach Anspruch 1 oder 2, **dadurch gekennzeichnet, daß** für jeden zu ermittelnden Sprühparameter ein neuronales Netz verwendet wird, dessen Ausgangswert in einem festen Zusammenhang mit dem zu ermittelnden Sprühparameter steht.

4. Verfahren nach Anspruch 1 oder 2, **dadurch gekennzeichnet, daß** wenigstens ein neuronales Netz verwendet wird, das über mehrere Ausgänge verfügt, die jeweils einem der zu ermittelnden Sprühparameter entsprechen.

5. Verfahren nach einem der vorstehenden Ansprüche, **dadurch gekennzeichnet, daß** als das wenigstens eine neuronale Netz ein Multilayer-Perceptron verwendet wird, das mit Hilfe eines Gradienten-Abstiegsverfahren (Backpropagation) angelernt wird.

## Claims

1. Method for determining spraying parameters which are suitable as input values for a paint spraying unit with electrostatic charging of a liquid paint, wherein
a) at least one artificial neural network is used to determine the spraying parameters, and an output of such a neural network is available for each spraying parameter,
b) a suitable number of real measured values are fed to the one neural network or a plurality of neural networks as input values, initially in a learning phase, said measured values also containing the associated real spraying parameters in addition to a paint thickness distribution in the form of discrete values, and
c) input values are fed to the one neural network or a plurality of neural networks in the application phase, said input values being the result of an analysis of the paint thickness distribution of a targeted, that is to say prescribed, spraying result.

2. Method according to Claim 1, **characterized in that** the real measured values to be input in the learning phase are determined at least partly by means of a mathematical model of the paint spraying unit.

3. Method according to Claim 1 or 2, **characterized in that** for each spraying parameter to be determined use is made of a neural network whose output value bears a fixed relationship to the spraying parameter to be determined.

4. Method according to Claim 1 or 2, **characterized in that** at least one neural network is used which has a plurality of outputs which respectively correspond to one of the spraying parameter to be determined.

5. Method according to one of the preceding claims, **characterized in that** use is made, as the at least one neural network, of a multilayer perceptron which is trained with the aid of a backpropagation method.

## Revendications

1. Procédé de détermination de paramètres de pulvérisation appropriés comme valeurs d'entrée pour une installation de pulvérisation de peinture dans laquelle une charge électrostatique est appliquée à une peinture liquide, selon lequel :
a) au moins un réseau neuronal artificiel est utilisé pour déterminer les paramètres de pulvérisation et une sortie d'un tel réseau neuronal est associée à chaque paramètre de pulvérisation,
b) un nombre adapté de valeurs de mesure réelles qui comprennent, en plus d'une répartition en épaisseur de la peinture sous la forme de valeurs discrètes, les paramètres de pulvérisation réels associés, sont transmises comme valeurs d'entrée dans le réseau neuronal ou les réseaux neuronaux, au cours d'une phase d'apprentissage,
c) des valeurs d'entrée qui sont le résultat d'une analyse de la répartition en épaisseur de peinture pour un résultat de pulvérisation recherché, c'est-à-dire prédéterminé, sont transmises au réseau neuronal ou aux réseaux neuronaux pendant la phase d'application.

2. Procédé selon la revendication 1, **caractérisé par le fait que** les valeurs de mesure réelles à entrer pendant la phase d'apprentissage sont déterminées au moins partiellement à l'aide d'un modèle mathématique de l'installation de pulvérisation de peinture.

3. Procédé selon la revendication 1 ou 2, **caractérisé par le fait que** pour chacun des paramètres de pulvérisation à déterminer on utilise un réseau neuronal dont la valeur de sortie est liée par une relation fixe au paramètre de pulvérisation à déterminer.

4. Procédé selon la revendication 1 ou 2, **caractérisé par le fait qu'**on utilise au moins un réseau neuronal qui présente plusieurs sorties qui correspondent chacune à un des paramètres de pulvérisation à déterminer.

5. Procédé selon une des revendications précédentes, **caractérisé par le fait qu'**on utilise comme réseau neuronal, au nombre d'au moins un, un perceptron multicouches, que l'on forme à l'aide d'une méthode à rétro-propagation de gradient.
